# EUROPÄISCHE PATENTSCHRIFT

(11) **EP 1 267 657 B1**
(45) Veröffentlichungstag und Bekanntmachung des Hinweises auf die Patenterteilung: **14.01.2004**
(21) Anmeldenummer: 01931387.3
(22) Anmeldetag: 28.03.2001
(51) Int. Cl.: A45C 5/14

(54) **GEPÄCKSTÜCK MIT ROLLEN**
BAGGAGE ITEM WITH ROLLERS
BAGAGE A ROULETTES

(30) Priorität: 28.03.2000 DE 10015422
(43) Veröffentlichungstag der Anmeldung: 02.01.2003
(73) Patentinhaber: Röder, Klaus, 82327 Tutzing (DE); Volckart, Martin, 88212 Ravensburg (DE)
(72) Erfinder: Röder, Klaus, 82327 Tutzing (DE); Volckart, Martin, 88212 Ravensburg (DE)
(74) Vertreter: Hofmann, Harald
(86) Internationale Anmeldenummer: PCT/DE2001/001199
(87) Internationale Veröffentlichungsnummer: WO 2001/072164

(56) Entgegenhaltungen:
- DE-A- 3 138 095
- DE-A- 3 512 844
- DE-U- 29 920 502
- FR-A- 2 607 089
- US-A- 3 834 726
- DATABASE WPI Section PQ, Week 199623 Derwent Publications Ltd., London, GB; Class P24, AN 1996-224202 XP002174709 -& JP 08 084617 A (TOKUYAMA T), 2. April 1996 (1996-04-02)

## Beschreibung

Die vorliegende Erfindung betrifft generell Gepäckstücke mit Rollen und insbesondere ein Gepäckstück mit zumindest zwei Rollen, wobei generell unter einem Gepäckstück ein Koffer, eine Tasche und ähnliches wie auch ein sogenannter Shopper, d.h. ein mit Rollen oder Rädern versehener Einkaufswagen zu verstehen ist.

Es sind eine Vielzahl an Gepäckstücken mit zumindest zwei Rollen bekannt, wie z.B. Hartschalenkoffer, die an einer Kante eine Achse mit zwei Rollen aufweisen, wobei an der diagonal gegenüberliegenden Kante meist ein Griff vorgesehen ist, um den Koffer hinter sich her zu ziehen. Ferner sind in diesem Umfeld auch sogenannte Trolleys bekannt; dies sind meist kleinere Koffer, bei denen sich die Achse mit zwei Rollen parallel zu einer der Hauptflächen des Koffers erstreckt. Bei dieser Art an Gepäckstück ist üblicherweise an der genannten Fläche eine ausziehbare Griffeinrichtung vorgesehen, so daß man den Trolley in einer Schrägstellung hinter sich herziehen kann.

Es sind auch in den letzten Jahren Koffer bekannt geworden, die einen Elektromotor enthalten und in der Art eines Fahrzeugs gefahren werden können, diese verfügen jedoch nur noch über sehr begrenzten Stauraum. Ein als Fortbewegungsmittel verwendbarer Koffer ist in der DE-A-3636064 bekannt. Dieser Koffer verfügt über von seiner unteren Schmalseite nach unten wegstehende Räder und läßt sich dadurch als Roller benutzen, daß die Drehachse von zumindest einem Rad in einer zur unteren Schmalseite parallelen Ebene verschwenkbar ist, wobei ein Trittglied im unteren Bereich des Koffers vorhanden ist, welches nach außen heraus bewegbar ist, wobei der Koffer ferner über ein Halteglied oberhalb des schwenkbaren Rads verfügt. Dieser Koffer ist in der Handhabung nicht sehr bequem, da ein Benutzer praktisch seitlich neben dem Koffer stehend sich über diesen beugen muß. Hierdurch wird auch die Manövrierfähigkeit stark beeinträchtigt, so daß ein erhebliches Risiko besteht, daß der Koffer bei Benutzung als Roller umkippt, wobei auch die Standfestigkeit lediglich vergleichbar zu handelsüblichen Koffern ist, wenn das Trittglied nicht - benutzt wird.

In der Vergangenheit sind einige Vorschläge unterbreitet worden, um weitere kleine Gepäckstücke an einem bestehenden größeren Gepäckstück zu befestigen, wobei hierbei meist gur oder riemenartige Mittel zum Einsatz kommen. Als Alternative hierzu wurde in der DE-A 3512844 ein Rollenkoffer beschrieben, der in einen fahrbaren Träger für weiteres Gepäc verwandelbar ist. Dieses Gepäckstück verfügt über 4 an der langen schmalen Seite angeord nete Rollen. Um weitere Gepäckstücke aufnehmen zu können, ist im unteren Bereich ein Trageplattform vorgesehen, die im Bereich der Kofferunterseite angelenkt und zwischen eine Bereitschaftsstellung an der Kofferseitenfläche und eine bodennahen Gebrauchsstellung arre tierbar verschwenkbar ist Um auch schwere Gepäckstücke auf der Trageplattform anordnen zu können, wird diese bodenseitig über eine Rolleneinrichtung abgestützt, wobei zur verbes serten Manövrierfähigkeit ein Griff oder Bügel vorgesehen ist, um den Rollenkoffer auch be ausgeschwenkter Trageplattform schiebbar und lenkbar zu gestalten.

Aus der JP 08 084617 ist ein Gepäckstück bekannt, welches über vier das Gepäckstück stüt zende Rollen verfügt. An dem Gepäckstück ist ein flächiges Element angelenkt, welches als Trittfläche nutzbar ist. Das flächige Element ist mit zusätzlichen Rollen versehen, dieser kommt aber keine das Gepäckstück tragende Funktion zu, trotz der Tatsache, daß bei der ebenfalls offenbarten schienenmäßigen Lagerung gegebenenfalls geringfügige Kräfte des Gepäckstücks aufgenommen werden könnten. Das hier beschriebene Gepäckstück entspricht somit dem Oberbegriff des Anspruchs 1.

Sämtlich bekannte Gepäckstücke mit Rollen sind bei einer schiebenden Bewegung schwer zu handhaben und neigen häufig dazu, sich beim Hinterherziehen aufzuschaukeln. Ein weiteres Problem bei bekannten Gepäckstücken mit Rollen, z.B. von Trolleys oder von hochkant stellbaren Gepäckstücken besteht darin, daß die Gepäckstücke leicht umfallen können, insbesondere bei stark frequentierten Orten, wo meist Eile geboten ist, wie z.B. an Flughäfen, Bahnhöfen und dergleichen.

Es ist daher Aufgabe der vorliegenden Erfindung, ein Gepäckstück mit zumindest zwei Rollen in solch einer Weise weiterzubilden, daß die Stand- und/oder Rolleigenschaften desselben verbessert sind. Hierbei soll das Gepäckstück auch einfach zu schieben oder zu ziehen sein und eine sichere Fortbewegung mittels des Gepäckstücks entsprechend der Benutzung eines Tretrollers ermöglichen.

ErfindungsgemäB wird obige Aufgabe durch ein Gepäckstück mit den Merkmalen des Anspruchs 1 gelöst. Bevorzugte Merkmale sind in den abhängigen Ansprüchen aufgeführt.

Insbesondere schlägt die Erfindung ein Gepäckstück mit zumindest zwei Rollen vor, wobei zumindest eine der Rollen, als bewegliche Rolle(n) über ein als Trittfläche nutzbares flächiges Element an dem Gepäckstück angelenkt, in eine operative Position bringbar und in dieser arretierbar ist/sind, die von der Projektionsfläche des Gepäckstücks in Aufsicht beabstandet ist, wobei sich das Gepäckstück dadurch auszeichnet, daß die in eine beabstandete Position bringbare(n) Rolle(n) in der operativen Position das Gepäckstück stützende(n) Rolle(n) ist/sind, die über das als Trittfläche nutzbare flächige Element an dem Gepäckstück derart angelenkt ist/sind, daß diese und die verbleibende(n) Rolle(n) jeweils auf unterschiedlichen Seiten einer vertikalen Ebene vorliegen, die den Schwerpunkt des Gepäckstückes enthält. Anders ausgedrückt wird erfindungsgemäß vorgeschlagen, eine Rolle an dem Gepäckstück in solch einer Weise vorzusehen, daß sie als Stand oder Rollstabilisator dienen kann, indem sie außerhalb der Projektionsfläche des Gepäckstücks in Aufsicht vorliegt. Hierdurch werden sowohl die Standeigenschaften als auch die Rolleigenschaften des Gepäckstücks verbessert. Da somit eine in sich stabile stand- und rollfeste Anordnung besteht, kann ein Benutzer auf der Trittfläche in besonders bequemer und sicherer Weise das Gepäckstück als Fortbewegungsmittel in der Art eines Tretrollers benutzen.

Vorteilhafterweise ist das flächige Element gleitfähig, insbesondere gleitfähig und schwenkbar mit dem Gepäckstück verbunden. Indem man das flächige Element gleitfähig mit Bezug auf das Gepäckstück ausbildet, kann dieses einfach bei Bedarf herausgezogen werden, wobei auch eine teleskopartige Anordnung denkbar ist, um die nutzbare Länge der Trittfläche und die Eigenschaften als Tretroller optimieren zu können. Eine gleitfähige und schwenkbare Verbindung mit dem Gepäckstück ermöglicht eine versatile möglichst platzeffiziente Anordnung mit Bezug auf das Gepäckstück in der nicht-operativen Position.

Um die Eigenschaften bei der Benutzung des erfindungsgemäßen Gepäckstuckes als Tretroller zu verbessern, kann es von Vorteil sein, das flächige Element biaxial schwenkbar mit dem Gepäckstück zu verbinden. Hierbei könnte es sich z. B. um eine erste Achse handeln, die im wesentlichen parallel zu den Rollenachsen verläuft, sowie um eine diesbezüglich lotrechte zweite Achse.

Bei einer bevorzugten Ausführungsform ist das flächige Element bzw. die in eine beabstandete Position bringbare Rolle bezüglich einer Bewegungsrichtung zum Wechseln zwischen inoperativer und operativer Position arretierbar, während ein Schwenken in einer die Rollen enthaltenden Ebene optional ermöglicht ist, so könnte man z. B. bei einer biaxialen

Anlenkung des flächigen Elements an dem Gepäckstück vorsehen, daß man dieses um eine im wesentlichen horizontale Achse verschwenken kann, um es in die operative Stellung zu bringen und in dieser zu arretieren. In dieser Konfiguration kann eine Verschwenkung um eine im wesentlichen vertikale Achse stattfinden, so daß ein tretrollerartiges Gepäckstück bereitgestellt wird, bei dem eine Lenkung dadurch ermöglicht wird, daß man ein Verschwenken des Gepäckstücks mit Bezug auf das flächige Trittelement erlaubt.

Bevorzugt ist eine Anlenkung des flächigen Elements bzw. der in eine beabstandete Position bringbaren Rolle zum Wechseln zwischen inoperativer und operativer Position von der oder dem anderen Rolle(n) beabstandet, insbesondere um im wesentlichen eine Gepäckstückabmessung abzüglich des Radius einer anderen Rolle. Durch eine Beabstandung zwischen Rollenachse und Schwenkachse ist es möglich, den Schwerpunkt des Gepäckstückes unabhängig davon ob in der operativen oder inoperativen Position vorliegend in einem Bereich vorzusehen, der bodenseitig zwischen den Rollen enthalten ist. Ein weiterer Vorteil kann sich hierbei dadurch ergeben, daß bei der Überführung der inoperativen in die operative Stellung das Gepäckstück selbst erhöht oder hochgefahren werden kann, so daß eine bessere Handhabbarkeit gewährleistet ist, insbesondere wenn der Benutzer groß gewachsen ist.

Ferner ist es bevorzugt, daß das Gepäckstück einen als Lenkmittel dienenden Griff aufweist. Um die Lenkfunktion darzustellen, können verschiedenste bekannte Mittel wie Bowdenzüge, Lenkgestänge, eine Hydraulik, ein Elektromotor, Zahnräder, eine Pneumatik etc. verwendet werden. Durch das Vorsehen von Lenkmitteln kann die Manövrierfähigkeit des Gepäckstücks deutlich verbessert werden, insbesondere, wenn man das Gepäckstück vor sich her schiebt, hinter sich her zieht oder wenn man das Gepäckstück in der Art eines Tretrollers oder eines Skateboards benutzt.

Schließlich ist es bevorzugt, daß zumindest eine der Rollen lenkbar ausgebildet ist, insbesondere durch eine Kraftbeaufschlagung lenkbar ist. Durch das Vorsehen von zumindest einer lenkbaren Rolle, welche sowohl eine in eine beabstandbare Position bringbare Rolle, wie auch eine andere Rolle sein kann, lassen sich unterschiedlichste Manövrierverhalten entsprechend den Wünschen des Benutzers darstellen. Lediglich beispielhaft sei eine elastisch gelagerte Achse angegeben, die bei Kraftbeaufschlagung zu einem lenkmäßigen Einschlag der daran befestigten Rollen führt. Diese Achse könnte z.B. an einer Kante des Gepäckstücks vorgesehen sein, während an einer anderen Kante die in eine beabstandete Position bringbare Rolle z.B. an einem flächigen Element vorgesehen ist, so daß sich das Gepäckstück ähnlich wie ein Skateboard manövrieren läßt.

Weitere Vorteile und Merkmale der Erfindung ergeben sich aus der anschließenden lediglich beispielhaft erfolgenden Beschreibung von derzeit bevorzugten Ausführungsformen, welche auf die beiliegenden Zeichnungen bezug nimmt, in welchen gilt:
Fig. 1 zeigt einen Koffer als eine erste bevorzugte Ausführungsform in Seitenansicht.
Fig. 2 zeigt den in Fig. 1 gezeigten Koffer in einer Ansicht von unten.
Fig. 3 zeigt den in den Fig. 1 und 2 gezeigten Koffer in einer Ansicht ähnlich zu Fig. 2, wobei jedoch die in eine beabstandete Position bringbare Rolle in der nicht operativen Position angeordnet ist.
Fig. 4 zeigt einen weiteren Koffer als zweite bevorzugte Ausführungsform der Erfindung in Seitenansicht.
Fig. 5 zeigt den in Fig. 4 dargestellten Koffer, wobei die in eine beabstandete Position bringbare Rolle in der gepäckstücknahen Position angeordnet ist.
Fig. 6 zeigt ein Gepäckstück als weitere bevorzugte Ausführungsform in einer Ansicht von unten.
Fig. 7 zeigt eine weitere bevorzugte Ausführungsform eines erfindungsgemäßen Gepäckstücks in Ansicht von unten.
Fig. 8 zeigt noch eine weitere Ausführungsform eines erfindungsgemäßen Gepäckstücks in Seitenansicht, wobei das Gepäckstück im wesentlichen in einer Richtung normal zur Hauptfläche rollbar ist.
Fig. 9 zeigt die in Fig. 8 gezeigte Ausführungsform in einer Ansicht von unten.
Fig. 10 zeigt die in Fig. 8 und 9 dargestellte Ausführungsform in einer Ansicht ähnlich zu Fig. 9, wobei die in eine beabstandete Position bringbare Rolle in der nicht-operativen Position vorliegt.
Fig. 11 zeigt noch eine bevorzugte Ausführungsform eines erfindungsgemäßen Gepäckstücks in Seitenansicht.
Fig. 12 zeigt die in Fig. 11 gezeigte Ausführungsform erneut in Seitenansicht mit eingeklapptem Griff und der in eine beabstandete Position bringbaren Rolle in einer gepäckstücknahen Position.

Die Figuren 13 bis 16 zeigen eine weitere bevorzugte Ausführungsform in unterschiedlichen Zuständen.

Die Figuren 17 und 18 zeigen schließlich eine Weiterbildung der in den Figuren 13 bis 16 gezeigten Ausführungsform.

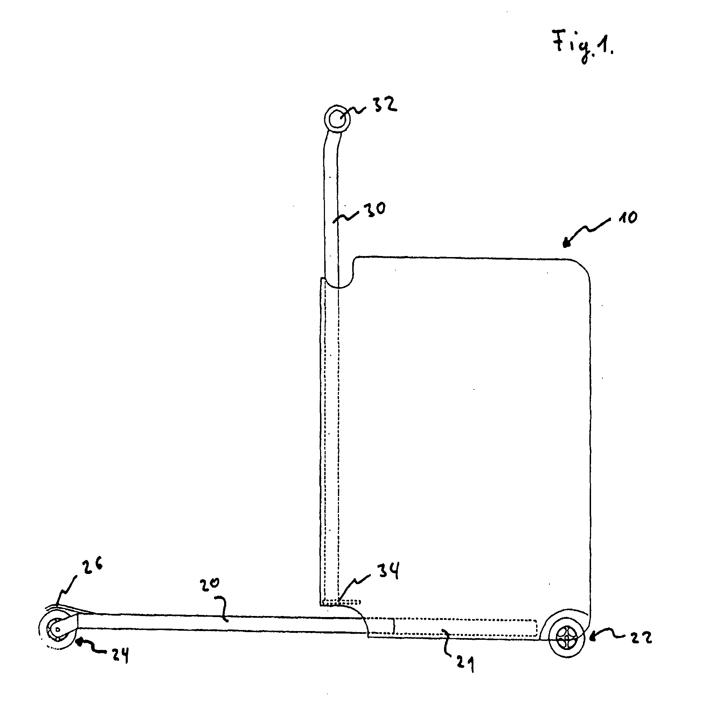

Fig. 1 zeigt in Seitenansicht einen Koffer 10 als eine bevorzugte Ausführungsform eines erfindungsgemäßen Gepäckstücks. Der Koffer 10 verfügt an einer Ecke seiner Hauptflächen über eine Rolle 22. An der sich an diese Ecke anschließenden Kante ist in der dargestellten Ausführungsform ein Auszugsmechanismus 20, 21 vorgesehen, an dessen distalem Ende eine Rolle 24 befestigt ist. Bei der gezeigten Ausführungsform ist an dem distalen Ende ferner ein Bremsmechanismus 26 vorgesehen, welcher bei Beaufschlagung von oben auf die Rolle 24 einwirken kann. Ferner umfaßt der Koffer 10 einen Griff 32, der über ein Teleskopgestänge 30 mit dem Gepäckstück selbst verbunden ist. In der gezeigten Ausführungsform ist am unteren Ende 34 des Gestänges 30 ein nicht dargestellter Bowdenzug vorgesehen, der auf die Achse, die die Rolle 22 stützt, lenkend einwirken kann. Somit wird bei einer Drehung des Griffs 32 um das Gestänge 30 die Rollrichtung der Rolle 22 verändert, so daß das Gepäckstück insgesamt in der Art eines Tretrollers bewegt werden kann, wobei beim Bezugszeichen 20 eine Trittfläche für den Benutzer bereit gestellt ist. die jedoch auch zur Ablage von weiteren Gepäckstücken dienen kann.

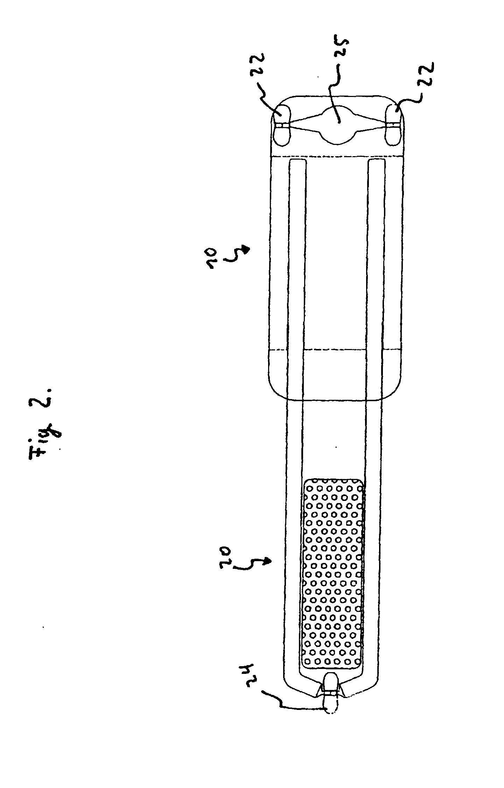

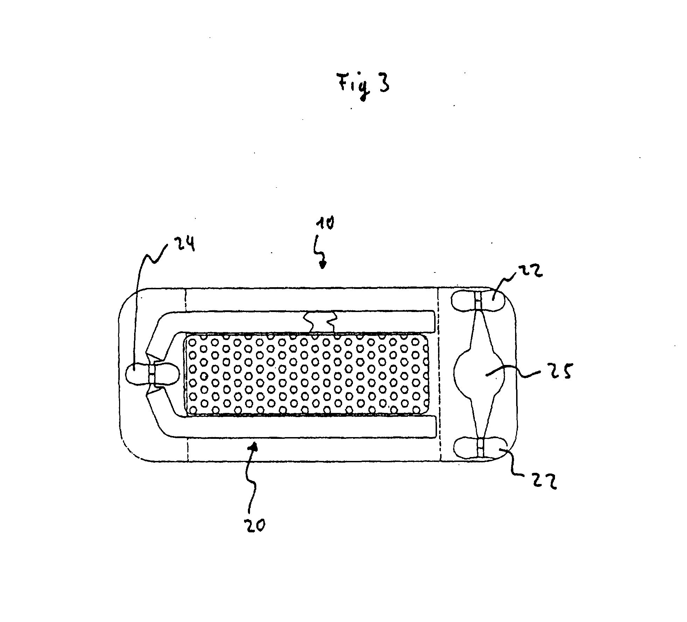

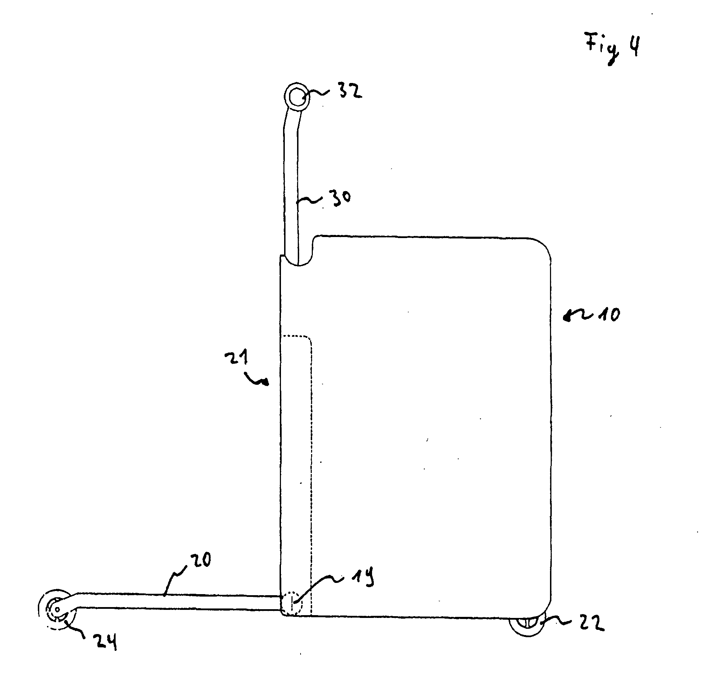

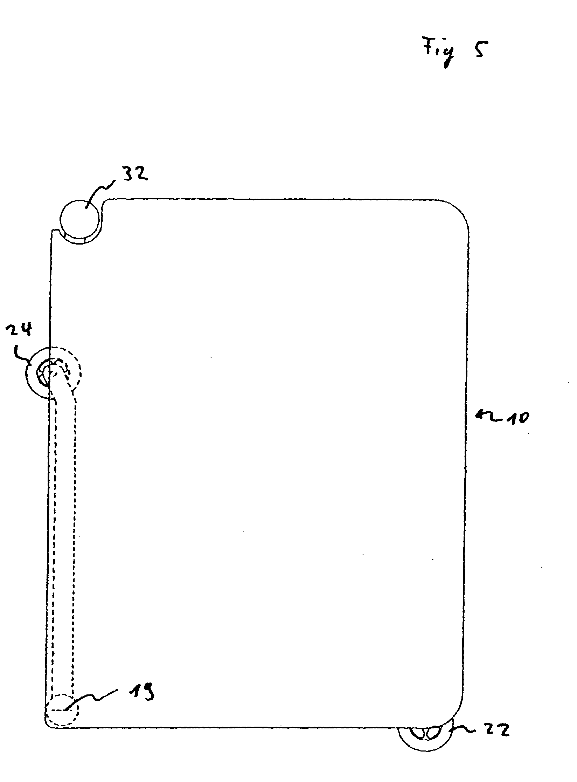

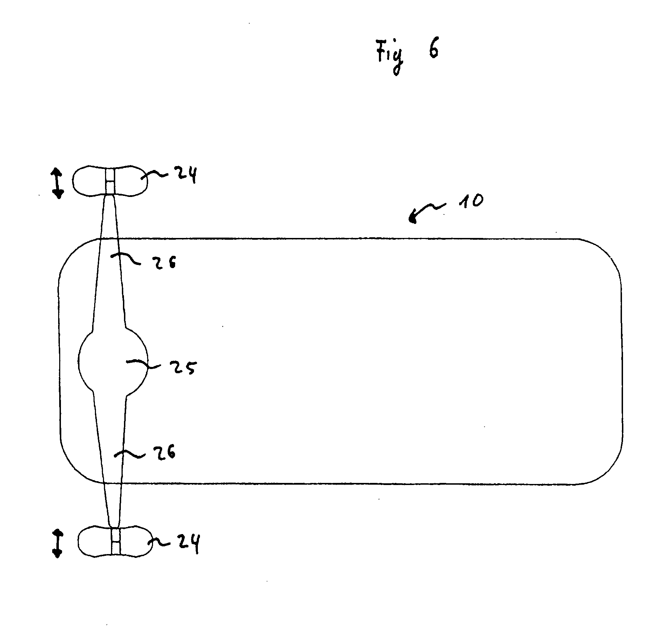

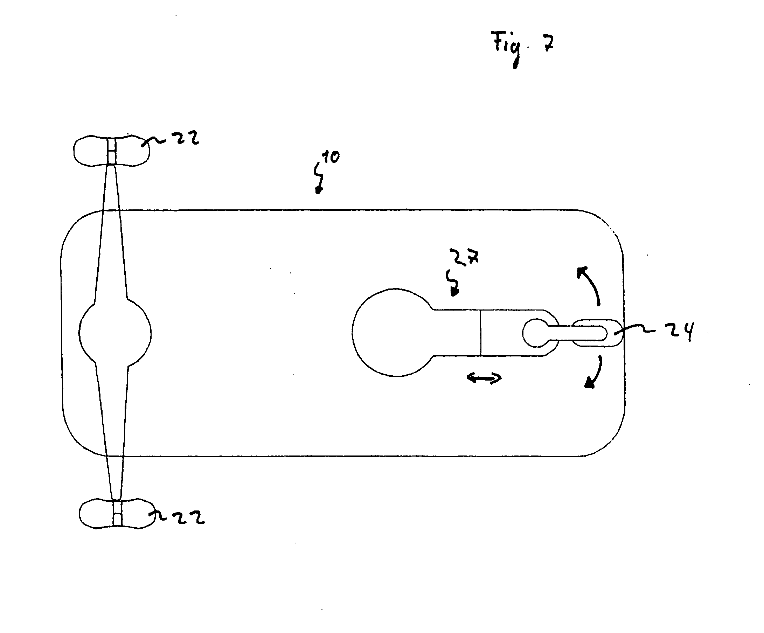

Wie es sich deutlich aus Fig. 2 ergibt, welche eine Ansicht von unten des in Fig. 1 gezeigten Koffers ist, verfügt das Gepäckstück dieser Ausführungsform über zwei an einer Achse 25 gelagerte Rollen 22 und eine an einem flächigen Element 20 ausgebildete Rolle 24, welche, wie dargestellt, in einer von der Projektionsfläche des Gepäckstücks beabstandeten Position angeordnet werden kann. Der Fachmann wird aus dieser Ansicht erkennen, daß neben dem oben erwähnten Bowdenzuglenkmechanismus die Lenkung auch durch eine elastische Achse 25 dargestellt werden könnte, so daß durch ein Schrägstellen des Gepäckstücks eine entsprechende Richtungsänderung erzielt werden kann.

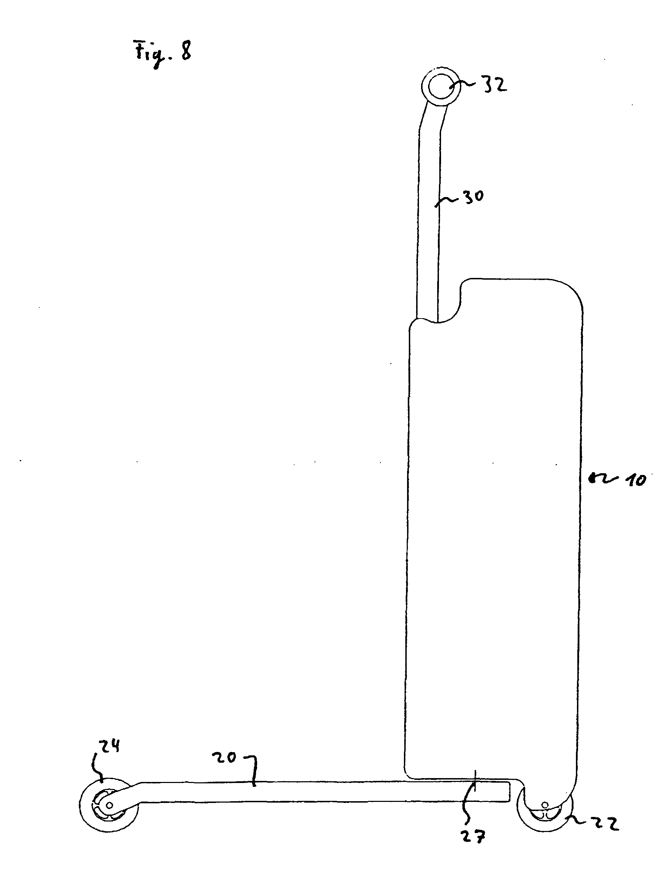

Wenn der Benutzer das Gepäckstück an den Ort gebracht hat, an dem er üblicherweise das Gepäckstück aufgibt oder verstaut, kann er einfach das flächige Element 20 unter den Koffer schieben, um zu der in Fig. 3 gezeigten Anordnung zu gelangen. In dieser Position verfügt das Gepäckstück über im wesentlichen für das Gepäckstück übliche Maße, ohne daß einzelne Bestandteile vorragen würden. Hierbei ist anzumerken, daß obwohl nicht dargestellt, sowohl in der in Fig. 2 gezeigten Position als auch in der in Fig. 3 gezeigten Position entsprechende Arretier- oder Rastmittel vorgesehen sein können, um einen unbeabsichtigten Übergang von der einen zu der anderen Position zu verhindern.

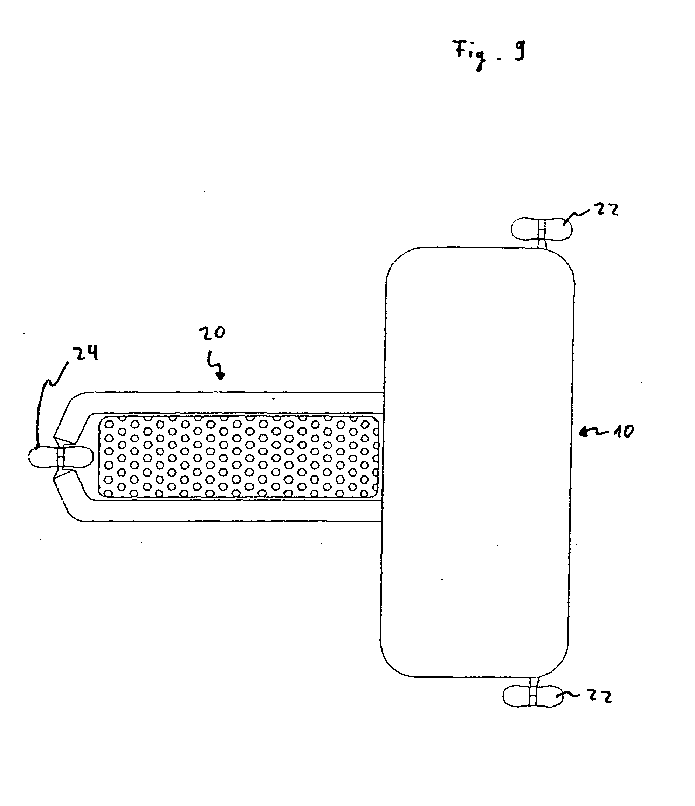

In den Fig. 4 und 5 ist eine alternative Ausführungsform dargestellt, bei welcher die in einer beabstandeten Position bringbare Rolle 24 ebenfalls über ein flächiges Element 20 mit dem Gepäckstück 10 selbst verbunden ist. Im Gegensatz zu der zuerst beschriebenen Ausführungsform ist das flächige Element 20 jedoch nicht ausziehbar bzgl. des Gepäckstücks, sondern schwenkbar mittels eines Scharniers 19 angelenkt. Bei der hier gezeigten Ausführungsform ist für das flächige Element 20 eine optionale Aussparung 21 vorgesehen, so daß, wie in Fig. 5 gezeigt, die Rolle 24 in eine Position bringbar ist, die nahe an dem Gepäckstück liegt, jedoch eine Bewegung des Gepäckstücks in rollender Weise nach wie vor ermöglicht.

Fig. 6 zeigt eine weitere bevorzugte Ausführungsform in einer Ansicht von unten. Bei dem hier dargestellten Gepäckstück 10 könnte es sich z.B. um einen üblichen Hartschalenkoffer handeln, der an einer Ecke mit einer Achse versehen ist, an der zwei Rollen 24 befestigt sind. Diese Koffer neigen häufig dazu, beim Ziehen in Schwingung zu geraten, so daß deren Handhabung häufig schwierig ist. Daher ist bei dieser Ausführungsform die Achse 25 mit zwei Teleskopabschnitten 26 versehen, die es ermöglichen, die Rollen 24 mehr oder weniger von dem Gepäckstück 10 zu beabstanden, so daß dessen Standeigenschaften und/oder Rolleigenschaften verbessert sind. Wie bei den vorangehenden Ausführungsformen kann die Achse 25 einen lenkenden Einfluß auf die Rollen 24 ausüben, wenn man z.B. eine elastisch gelagerte Achse vorsieht, die bei einer Schrägstellung des Koffers zu einer entsprechenden Richtungsänderung führt. Auch hierdurch können die Nachlaufeigenschaften des Gepäckstücks noch weiter verbessert werden.

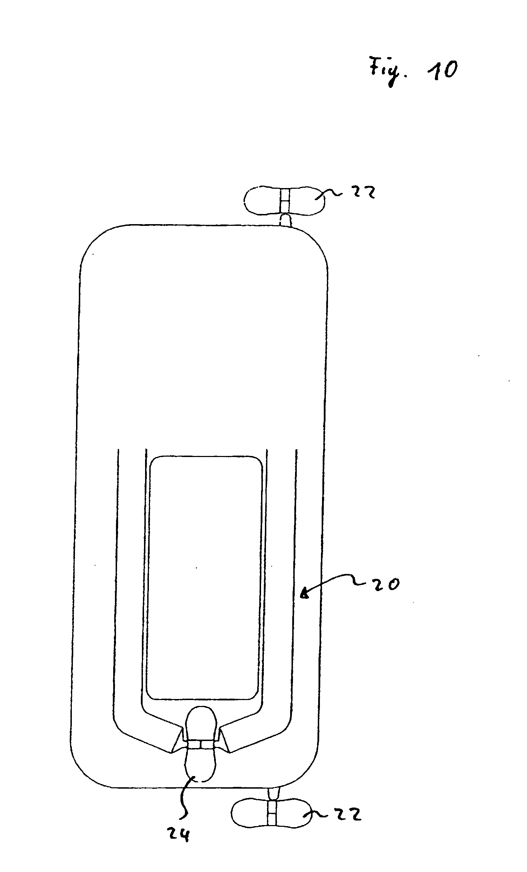

Fig. 7 zeigt noch eine weitere bevorzugte Ausführungsform eines erfindungsgemäßen Gepäckstücks in einer Ansicht von unten. Bei dieser Ausführungsform sind zwei Rollen 22 ortsfest an einer Achse gelagert, wobei eine dritte Rolle 24 über einer Einrichtung 27 verschwenkt und/oder ausgezogen werden kann. Der Fachmann wird erkennen, daß somit durch Verschwenken und/oder Ausziehen der Einrichtung 27 die Rolle 24 in eine Position außerhalb der Projektionsfläche des Gepäckstücks gebracht werden kann, um als Stützeinrichtung ein Umfallen des Gepäckstücks zu verhindern.

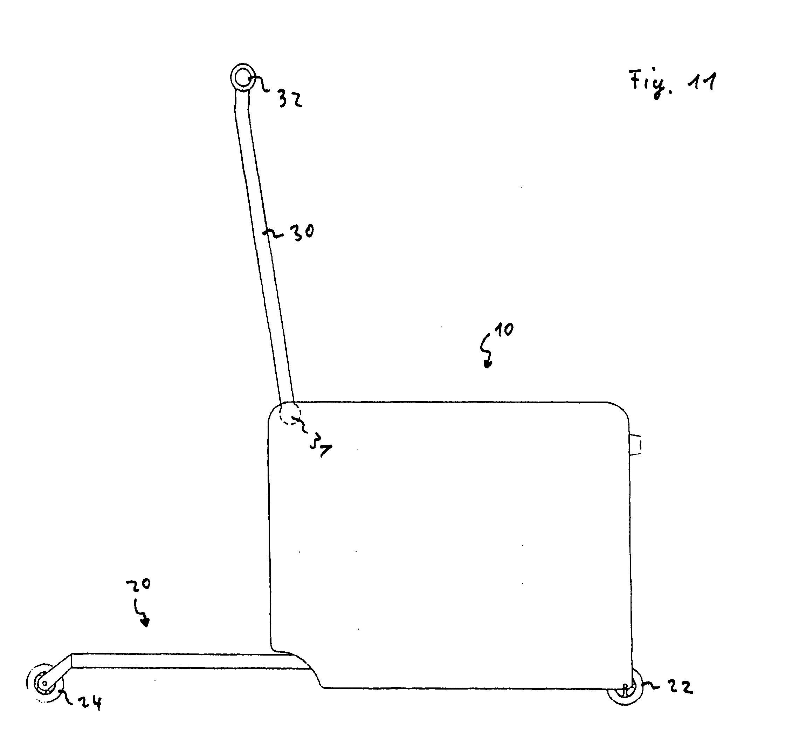

In den Fig. 8, 9 und 10 ist ein sogenannter Trolley als weitere bevorzugte Ausführungsform eines erfindungsgemäßen Gepäckstücks dargestellt, wobei es sich jedoch auch um einen sogenannten Shopper, d.h. einen Einkaufswagen handeln könnte. Wie bei den beiden zuerst beschriebenen Ausführungsformen verfügt der Koffer 10 über ein Paar an feststehenden Rollen 22, sowie über eine in eine beabstandbare Position bringbare Rolle 24. Wie sich auch aus der Ansicht von unten gemäß Fig. 9 ergibt, ist die Rolle 24 über ein flächiges Element 20, welches in der operativen Position als Trittfläche dienen kann, an dem Gepäckstück 10 befestigt. Beim Bezugszeichen 27 ist das flächige Element 20 in solch einer Weise an dem Koffer angelenkt, daß es in einer im wesentlichen horizontalen Ebene verschwenkt werden kann. Durch die Anlenkung beim Bezugszeichen 27 können die Lenkeigenschaften des Gepäckstücks deutlich verbessert werden, wobei auch auf komplizierte Mechanismen zur Lenkung von einer oder mehreren Rollen verzichtet werden kann. Bei der gezeigten Ausführungsform wird somit durch Einwirkung auf den Griff 32 über die ausziehbare Lenkstange 30 des Gepäckstücks 10 in die gewünschte Richtung verschwenkt, wobei, obwohl nicht dargestellt, bei dieser Ausführungsform eine Bremseinrichtung vorsehbar ist, die z.B. unter Zwischenschaltung eines Bowdenzugs wahlweise auf die Rolle 22 oder die Rolle 24 einwirken kann.

Fig. 10 zeigt die in den Fig. 8 und 9 dargestellte Ausführungsform nachdem das flächige Element 20 mit der zugeordneten Rolle 24 in die inoperative Position, d.h. unter den Koffer gebracht wurde. Bei dieser Ausführungsform kann es vorteilhafterweise möglich sein, mit dem Einschwenken des flächigen Elements 20 die Rolle 24 leicht anzuheben. Um eine möglichst große Trittfläche oder Ablagefläche mittels des flächigen Elements 20 bereitstellen zu können, ist dieses gleitschwenkbar an dem Gepäckstück 10 befestigt, so daß zu Verstauzwecken das flächige Element erst verschwenkt und anschließend unter den Koffer geschoben oder auch teleskopartig zusammengeschoben werden kann.

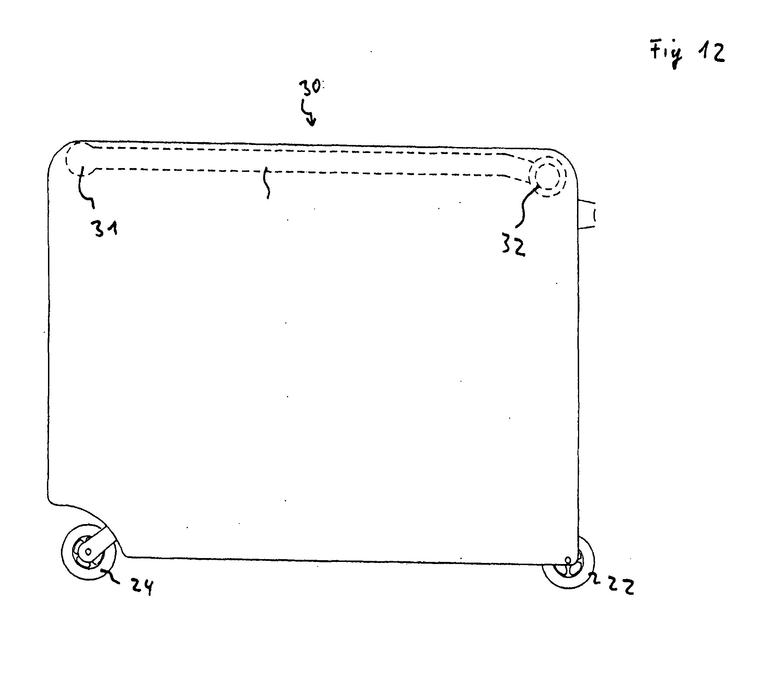

In den Fig. 11 und 12 ist eine weitere Ausführungsvariante eines erfindungsgemäßen Gepäckstücks gezeigt. Bei diesem Gepäckstück ist die Lenkstange 30 mit dem zugeordneten Griff 32 schwenkbar an dern Gepäckstück 10 durch ein Scharnier 31 angelenkt. Bei der hier dargestellten Ausführungsform ist wiederum ein flächiges Element 20 mit daran befestigter Rolle 24 vorgesehen, wobei diese Ausführungsform zusätzlich über den Vorteil verfügt, daß das Gepäckstück auch über die Rollen 22 gerollt werden kann, während man das flächige Element 20 mit zugehöriger Rolle 24 als Griff verwenden könnte.

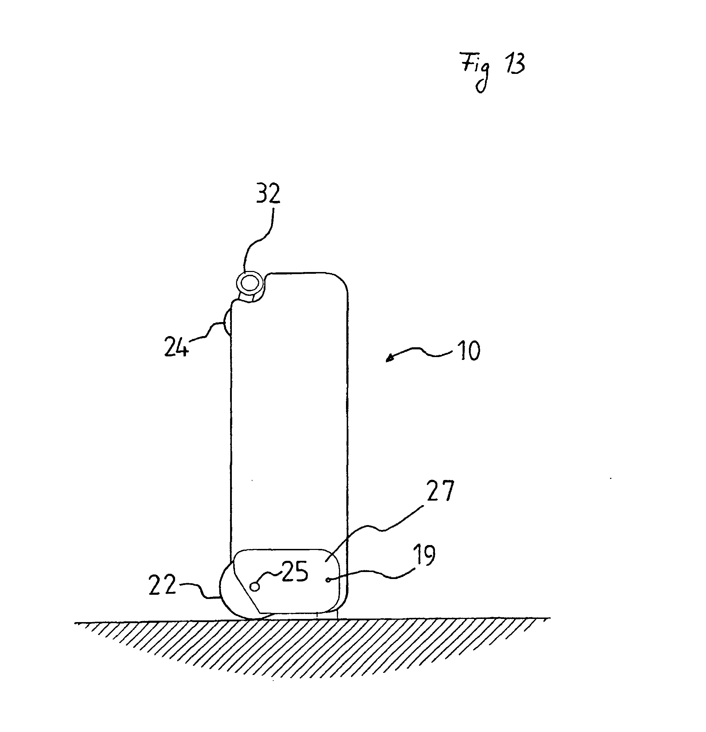

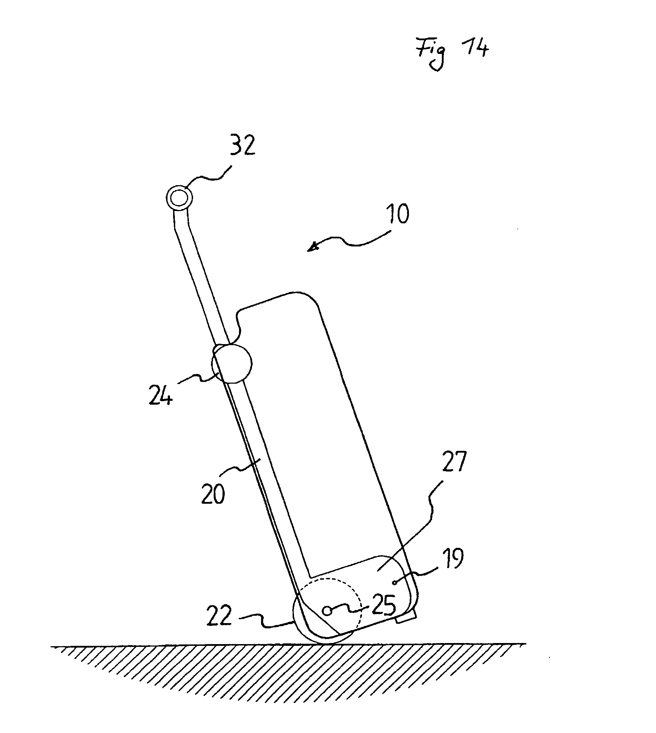

In den Fig. 13 bis 16 ist eine bevorzugte Ausführungsform in unterschiedlichen möglichen Positionen dargestellt. Das gezeigte Gepäckstück 10 ist in der Form eines Trolleys aufgebaut und verfügt über einen Griff 32, der eingefahren (Fig. 13) und herausgefahren (Fig. 14) werden kann. Ferner verfügt das Gepäckstück in der gezeigten Ausführungsform über zwei im Seitenbereich der kurzen Seitenkante des Gepäckstückes angeordnete Rollen mit relativ großem Durchmesser, wodurch die Rolleigenschaften verbessert sind. In der gezeigten Ausführungsform verfügen die Rollen 22 in etwa über einen Durchmesser von 20 cm. Im Gegensatz zu den voran beschriebenen Ausführungsformen sind die Rollen 22 nicht unmittelbar an dem Gepäckstück 10 selbst festgelegt, sondern unter Zwischenschaltung eines Elementes 27, welches die Achse bzw. Achsen 25 der Rolle oder Rollen 22 trägt. Das Element 27 ist beim Bezugszeichen 19 an dem Gepäckstück 10 angelenkt.

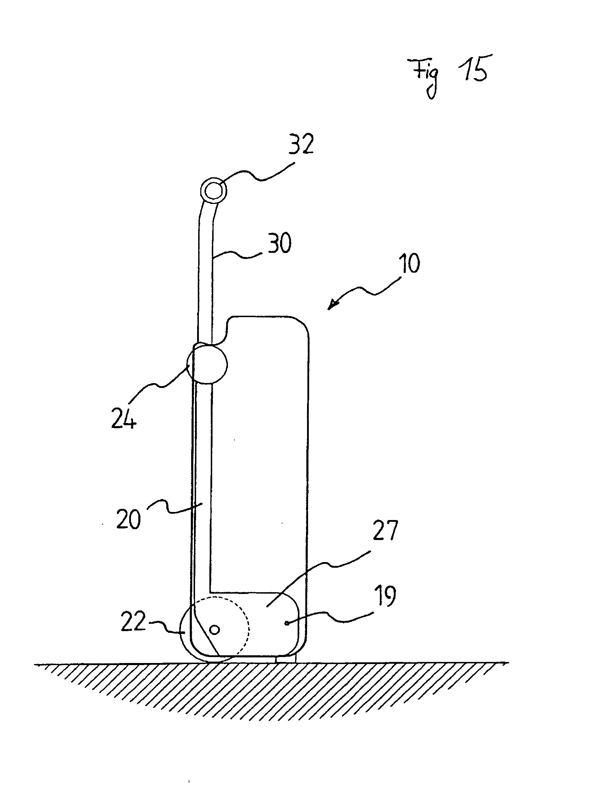

Ausgehend von der Konfiguration, wie sie in Fig. 13 dargestellt ist, wird ein Benutzer zuerst den Griff 32 herausziehen, um dann den Koffer wie einen Trolli hinter sich her ziehen zu können, wie dies in Fig. 14 angedeutet ist. In dieser Konfiguration ist das mit dem Element 27 verbundene flächige Trittelement 20 mit der zugeordneten Rolle 24 in der inoperativen Position. Wenn ein Benutzer das Gepäckstück nun abstellen möchte, so kann er dies einfach in der Weise tun, wie er es üblicherweise mit einem Trolli vornimmt, wie es z. B. in Fig. 15 dargestellt ist.

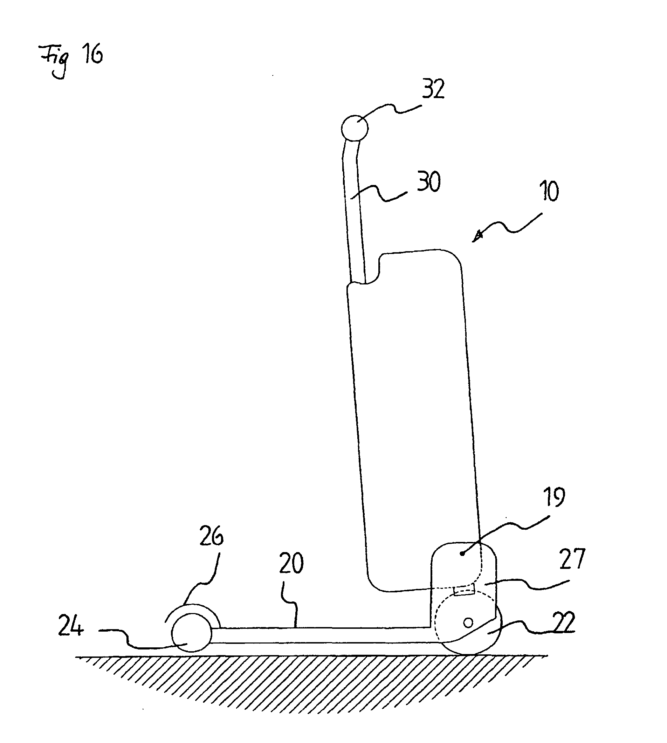

Aus dieser Position heraus kann das erfindungsgemäße Gepäckstück der hier dargestellten Ausführungsförm zu einem tretrollerartigen Gefährt umgewandelt werden, indem man das flächige Element 20 um die Anlenkung 19 herum verschwenkt. Durch das Element 27, welches eine Beabstandung zwischen der Anlenkung 19 und der Achse 25 bereitstellt, wird die Rolle 22 unter dem Schwerpunkt hindurchgeführt, so daß die in Fig. 16 gezeigte Konfiguration eine in sich stabile Anordnung ausbildet. Selbstverständlich sind entsprechende Arretiermittel zum Sichern dieser Konfiguration vorgesehen, die jedoch nicht dargestellt und im Detail diskutiert werden sollen. Wesentlich ist, daß erfindungsgemäß eine deutlich verbesserte Standfestigkeit und deutlich verbesserte Rolleigenschaften erzielt werden, die zu der bequemen und sicheren Nutzung in der Art und Weise eines Tretrollers beitragen.

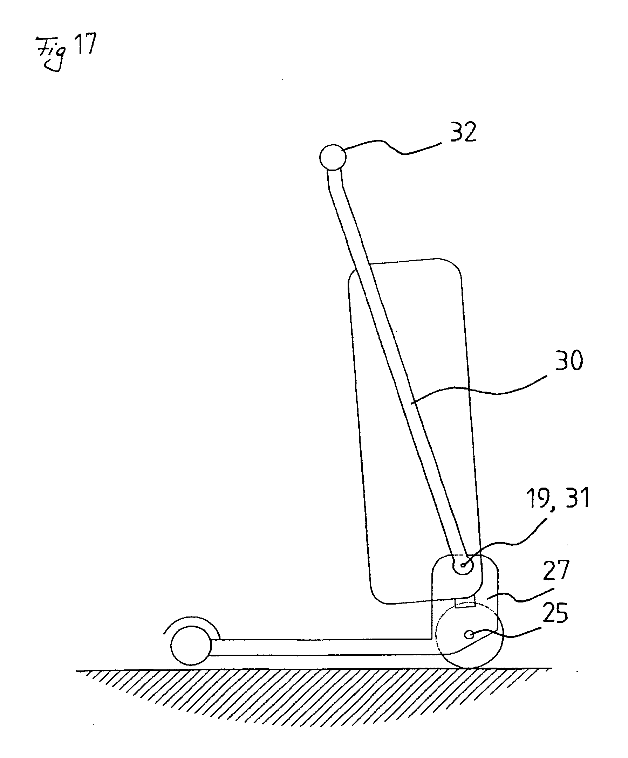

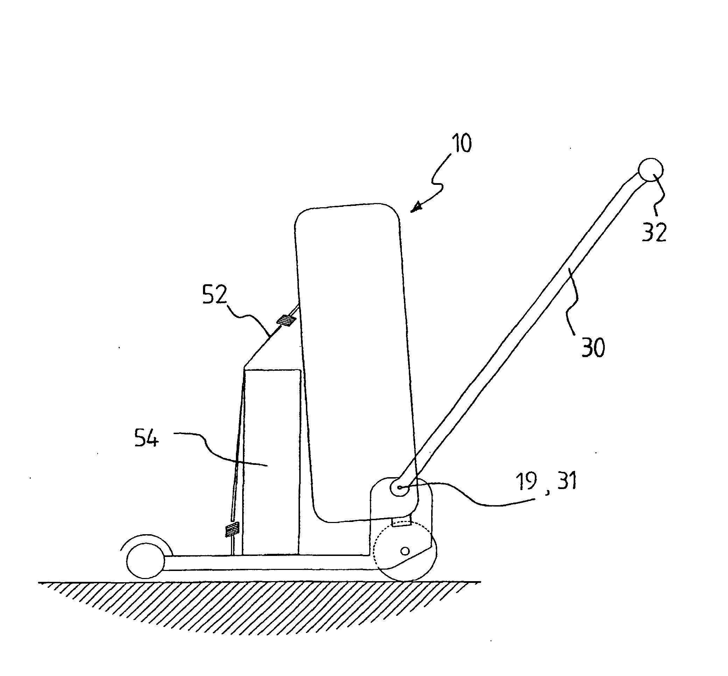

Die Fig. 17 und 18 zeigen eine Weiterbildung der zuletzt beschriebenen Ausführungsform. Bei dieser Ausführungsform ist die Anlenkung beim Punkt 19 mit der Anlenkung des Gestänges 30 für den Griff 32 kombiniert. Wie deutlich zu erkennen, kann somit die Funktionalität gemäß der vorangehend beschrieben Ausführungsform um die Funktionalität eines ziehbaren Wagens mit Deichsel erweitert werden.

Obwohl bei der Beschreibung der in den Fig. 13 bis 18 gezeigten Ausführungsformen das flächige Element 20 fest verbunden mit Bezug auf das Element 27 dargestellt und beschrieben wurde, ist es im Rahmen der Erfindung auch möglich, statt dieser festen Verbindung eine Anlenkung vorzusehen, die eine Verschwenkung des flächigen Elementes 20 mit Bezug auf das Gepäckstück in einer horizontalen Ebene ermöglicht, um die Lenkeigenschaften noch zu verbessern.

Die Fahr- und Lenkeigenschaften können noch verbessert werden, indem man einen sogenannten Nachlauf vorsieht. Dieser umfaßt beispielhaft eine Schrägstellung des Lenkgestänges mit Bezug auf eine lenkbare Rolle oder die Anordnung der lenkbaren Rolle oder Rollen vor dem beispielhaft verschwenkbaren Lenkmittel.

Obwohl die Erfindung vorangehend vollständig und im Detail unter Bezugnahme auf derzeit bevorzugte Ausführungsformen beschrieben wurde, wird der Fachmann erkennen, daß verschiedenste Veränderungen und Modifikationen im Rahmen der Ansprüche möglich sind, ohne von dem Gegenstand der Ansprüche abzuweichen. Insbesondere ist zu erwähnen, daß einzelne Merkmale einer Ausführungsform beliebig mit anderen Merkmalen anderer Ausführungsformen im Rahmen der Ansprüche kombinierbar sind. Schließlich ist zu erwähnen, daß verschiedenste Anordnungen und Anzahlen an gebremsten und ungebremsten, gelenkten und ungelenkten Rollen möglich sind, wie z.B. eine feststehende Rolle und zwei in eine beabstandete Position bringbare Rollen, wobei die verschiedensten Lenk- und Bremsmittel zum Einsatz kommen können.

## Patentansprüche

1. Gepäckstück (10) mit zumindest zwei Rollen (22, 24), wobei zumindest eine der Rollen (22, 24), als bewegliche Rolle über ein als Trittfläche nutzbares flächiges Element (20), an dem Gepäckstück angelenkt, in eine operative Position bringbar und in dieser arretierbar ist, die von der Projektionsfläche des Gepäckstücks 10 in Aufsicht beabstandet ist, **dadurch gekennzeichnet, daß** die zumindest eine in eine beabstandete Position bringbare Rolle in der operativen Position das Gepäckstück stützende Rolle ist, die über das als Trittfläche nutzbare flächige Element (20) an dem Gepäckstück (10) derart angelenkt ist, daß diese und die verbleibende Rolle jeweils auf unterschiedlichen Seiten einer vertikalen Ebene vorliegen, die den Schwerpunkt des Gepäckstückes enthält.

2. Gepäckstück (10) nach Anspruch 1, **dadurch gekennzeichnet, daß** das flächige Element (20) gleitfähig, insbesondere gleitfähig und schwenkbar mit dem Gepäckstück (10) verbunden ist.

3. Gepäckstück (10) nach Anspruch 1 oder 2, **dadurch gekennzeichnet, daß** das flächige Element (20) bi-axial schwenkbar mit dem Gepäckstück (10) verbunden ist.

4. Gepäckstück (10) nach einem der vorangegangen Ansprüche, **dadurch gekennzeichnet, daß** das flächige Element (20) bzw. die in eine beabstandete Position bringbare Rolle (24) bezüglich einer Bewegungsrichtung zum Wechseln zwischen in-operativer und operativer Position arretierbar ist, während ein Schwenken in einer die Rollen (22, 24) enthaltenden Ebene optional ermöglicht ist.

5. Gepäckstück (10) nach einem der vorangegangen Ansprüche, **dadurch gekennzeichnet, daß** eine Anlenkung (19) des flächigen Elements (20) bzw. der in eine beabstandete Position bringbaren Rolle (24) zum Wechseln zwischen in-operativer und operativer Position von der bzw. den anderen Rollen beabstandet ist, insbesondere um im wesentlichen eine Gepäckstückabmessung abzüglich des Radius einer anderen Rolle (22).

6. Gepäckstück (10) nach einem der vorangegangen Ansprüche, **dadurch gekennzeichnet, daß** das Gepäckstück (10) einen als Lenkmittel dienenden Griff (30,32) aufweist.

7. Gepäckstück nach Anspruch 6, **dadurch gekennzeichnet, daß** die Lenkmittel auf eine Achse (25) einwirken, insbesondere diesbezüglich in der Art einer Deichsel angeflanscht sind.

8. Gepäckstück nach Anspruch 7, **dadurch gekennzeichnet, daß** bei bestimmten Drehund/oder Schwenkpositionen der Lenkmittel, die an einer Achse (25) vorgesehenen Rollen (22, 24) gebremst werden.

9. Gepäckstück (10) nach einem der vorangegangen Ansprüche, **dadurch gekennzeichnet, daß** zumindestens eine der Rollen (22, 24) lenkbar, insbesondere durch eine Kraftbeaufschlagung lenkbar ist.

10. Gepäckstück (10) nach einem der vorangegangenen Ansprüche, **dadurch gekennzeichnet, daß** zumindest eine der Rollen (22, 24) mit einer Bremseinrichtung (26) versehen ist.

## Claims

1. Baggage item (10) with at least two rollers (22, 24), whereby at least one of the rollers (22, 24) is as moveable roller attached to the baggage item via a flat element (20) that can be used as standing surface and can be moved to an operating position in which it can be locked and which is at a distance from the projected area of the baggage item (10) if seen in a top view, **characterised in that** said at least one roller, that can be moved to a set apart position acts in the operating position as a roller that supports the baggage item which is attached to the baggage item (10) via the flat element (20) that can be used as a standing surface in such a way, that this and the remaining roller are positioned on different sides of a vertical plane that contains a the centre of gravity of the baggage item.

2. Baggage item (10) according to claim 1, **characterised in that** the flat element (20) is connected to the baggage item (10) in a manner allowing it to slide, in particular allowing it to slide and swivel.

3. Baggage item (10) according to claim 1 or 2, **characterised in that** the flat element (20)is connected with the baggage item (10) in a way allowing biaxial rotation.

4. Baggage item (10) according to anyone of the preceding claims, **characterised in that** the flat element (20) or the roller (24) that can be moved to a set apart position can be locked with respect to a direction of movement that is used to switch between the stand-by position and the operating position, while a rotation in a plane that contains the roller (22, 24) is optionally possible.

5. Baggage item (10) according to anyone of the preceding claims, **characterised in that** a swivel pivot point (19) for switching between the standby position and the operation position of the flat element (20) or the roller (24) that can be moved to a set apart position is located at a distance from the other roller or rollers, in particular at a distance of essentially one baggage item dimension minus the radius of the other roller (22).

6. Baggage item (10) according to anyone of the preceding claims, **characterised in that** the baggage item (10) is equipped with a handle (30, 32) that serves as a steering means.

7. Baggage item (10) according to claim 6, **characterised in that** the steering means acts on an axle (25), in particular for this purpose they are flange mounted like a drawbar.

8. Baggage item (10) according to claim 7, **characterised in that** the rollers provided on one axle (25) are braked as in result of certain rotational or swivable positions of the steering means.

9. Baggage item (10) according to anyone of the preceding claims, **characterised in that** at least one of the rollers (22, 24) is steerable, in particular steerable by application of force or weight.

10. Baggage item (10) according to anyone of the preceding claims, **characterised in that** at least one of the rollers (22, 24) is equipped with a breaking device (26).

## Revendications

1. Pièce de bagage (10) avec au moins deux roues (22, 24), au moins l'une des roues (22, 24) étant une roue mobile par moyens d'un élément surfacique (20) pouvant servir comme support de pied et ajouré à la pièce de bagage, apte à être mise en position opérationnelle et apte à être bloqué dans cette dernière, se trouvant à une distance par rapport à la surface de projection de la pièce de bagage (10) en vue de plan, **caractérisé en ce que** la dite au moins une roue étant apte à être porté dans une position lointaine est une roue servant d'appui à la pièce de bagage dans la position opérationnelle étant ajouré par moyens de l'élément surfacique (20) pouvant servir d'appui de pieds à la pièce de bagage (10) de sorte que cette dernière et l'autre roue se trouvent respectivement de part et d'autre d'un plan vertical comprenant le centre de gravité de la pièce de bagage.

2. Pièce de bagage (10) selon la revendication 1 **caractérisé en ce que** l'élément surfacique (20) est ajouré par rapport à la pièce de bagage apte à glisser, en particulier apte à glisser et à pivoter.

3. Pièce de bagage (10) selon la revendication 1 ou 2, **caractérisé en ce que** l'élément surfacique (20) est ajouré par rapport à la pièce de bagage (10) de façon d'un pivotement biaxial.

4. Pièce de bagage (10) selon l'une quelconque des revendications précédentes, **caractérisé en ce que** l'élément surfacique (20) ou la roue apte à être apporté dans une position lointaine ou distante est apte à être arrêté par rapport à une direction de mouvement pour changer entre une position non-opérationnelle et une position opérationnelle, alors que un pivotement dans un plan contenant les roues (22, 24) est optionnellement possible.

5. Pièce de bagage (10) selon l'une quelconque des revendications précédentes, **caractérises en ce que** un point d'ajournement (19) de l'élément surfacique (20) ou de la roue, apte à être apporté dans une position lointaine ou distante se trouve à distance, en particulier à distance de l'ordre sensiblement correspondant à une mesure de la pièce de bagage moins le rayon d'une autre roue (22) au fins de changement entre position non-opérationnelle et position opérationnelle.

6. Pièce de bagage (10) selon l'une quelconque des revendications précédentes, **caractérises en ce que** la pièce de bagage (10) comprend une poigné (30, 32) servant comme moyen de guidage.

7. Pièce de bagage (10) selon la revendication 6, **caractérisé en ce que** le moyen de guidage intervient sur un axe (25), en particulier de façon d'un timon ajouré par moyens de flasques.

8. Pièce de bagage (10) selon la revendication 7, **caractérisé en ce que** dans certaines positions de rotation et/ou de pivotement du moyen de guidage les roues (22, 24) prévues sur un axe (25) sont freinés.

9. Pièce de bagage (10) selon l'une quelconque des revendications précédentes, **caractérisé en ce que** au moins une des roues (22, 24) est apte à être guidé, en particulier à être guidé sous charge ou poids.

10. Pièce de bagage (10) selon l'une quelconque des revendications précédentes, **caractérises en ce que** au moins une des roues (22, 24) est pourvue de moyens de freinage (26).
